Europäisches Patentamt

European Patent Office

Office européen des brevets

(11) Publication number: **0 449 021 A2**

# EUROPEAN PATENT APPLICATION

(21) Application number: **91103680.4**

(22) Date of filing: **11.03.91**

(51) Int. Cl.⁵: **C08J 7/04, C08J 7/02**

(30) Priority: **12.03.90 US 491998**

(43) Date of publication of application:
**02.10.91 Bulletin 91/40**

(84) Designated Contracting States:
**DE FR GB**

(71) Applicant: **DOW CORNING CORPORATION**
**P.O. Box 1767**
**Midland Michigan 48686-0994(US)**

(72) Inventor: **Luckenbach, Roy**
**10337 John's Towne Drive**
**Charlotte, North Carolina(US)**

(74) Representative: **Spott, Gottfried, Dr. et al**
**Spott Weinmiller & Partner**
**Sendlinger-Tor-Platz 11**
**W-8000 München 2(DE)**

(54) **Coated and laminated solid synthetic polymers.**

(57) The invention disclosed herein deals with a process of treating solid synthetic polymers to render them hydrophilic whereupon the polymers are then treated with curable polymeric materials to give the solid synthetic polymers beneficial properties. An example is the hydrophilization of polyester fabric and the subsequent coating of treated entire material. The coated fabric material is useful for preparing laminates among other articles.

EP 0 449 021 A2

This invention deals with improved coated and laminated solid synthetic polymers. The improvement resides in the fact that the solid synthetic polymers are treated with a unique process to make them hydrophilic in order that they are more receptive to the materials that they are coated with or laminated with.

The treatment creates a greater affinity of the coating materials towards the solid synthetic polymers which allows a thorough wetting of the solid synthetic polymers, which in turn, creates better flow out of the coating materials resulting in greater adhesion of the coating materials to the solid synthetic polymers.

The greater wettability and adhesion gives the resulting solid synthetic polymers better performance properties than could be had heretofor.

The process that is used to create the surface leading to the novel materials of this invention is a process that is known in the prior art, specifically, it is set forth in U.S. Patent No. 4,803,256. The inventor therein sets forth a process for altering the surface of solid synthetic polymers using a chemical process, which results in, among other benefits, solid synthetic polymers having hydrophilic properties, i.e., the solid polymers are more wettable by various flowable materials.

The method in general comprises contacting a solid synthetic polymer, i.e., a textile with a swelling agent and a base and heating, to alter the textile and then acidifying the treating bath and contacting the solid synthetic polymer with an active substance, such as a hydrophilic polymer, to further alter the textile to give it hydrophilic properties.

It is believed by the inventor herein, that nowhere in the art, has it been taught that such processing would enhance the wettability and adhesion of various flowable materials to such treated substrates to give the benefits of the invention described in this specification.

The present invention therefore deals with solutions to the problems of wettability and adhesion of various flowable materials to solid synthetic polymers.

Thus it is an object of this invention to provide a process for obtaining coated solid synthetic polymers.

It is a further object of this invention to provide a process for obtaining laminated solid synthetic polymers.

It is still another object of this invention to provide novel coated and laminated solid synthetic polymers which give water repellency and yet allow the transportation of of water vapors through the coating and lamination product.

It is a final object of this invention to provide articles that are manufactured from the novel coated and laminated solid synthetic polymers.

The above described benefits and many other perceived advantages are achieved in accordance with the present invention which covers a process comprising (I) altering the surface of a solid synthetic polymer by a process comprising (A) contacting the solid synthetic polymer with a bath of a swelling agent, or a mixture of swelling agents, and a base, at a pH of seven or greater; (B) heating the bath to a temperature of at least 200° F. for a time of at least 1 second; (C) acidifying the bath to a pH of less than 7; (D) contacting the solid synthetic polymer with a hydrophilic active substance for at least five minutes; (E) thereafter separating the polymer and the bath and, (II) coating the treated polymer from (I) with a flowable, curable, coating composition and, (III) curing the coating on the solid synthetic polymer.

To obtain the benefits described above, there is also disclosed herein, a process comprising joining two or more of the altered solid synthetic polymers obtained from step (I) of the process described supra, by contacting at least one of the surfaces of at least one of the altered solid synthetic polymers with a flowable, curable coating composition, overlaying the flowable, curable coating composition with at least one additional second layer of solid synthetic polymer to form a laminate and curing the coating composition.

Finally, there is disclosed novel coated and laminated solid synthetic polymers and articles that are manufactured from the novel coated and laminated solid synthetic polymers to provide benefits not heretofor obtainable.

The treatment of solid synthetic polymeric textiles is the preferred mode of this invention. The inventor herein contemplates that the word "textile" as used herein encompasses synthetic and synthetic/natural blends of fabric structures including woven and nonwoven and knits such as warp knit and circular knit, among others. Also contemplated within the scope of this invention are synthetic films such as aramid, polyester and nylon films.

For purposes of this invention, the process comprises in the first part, the process as set forth in U.S. Patent 4,803,256, for what it teaches about hydrophilizing the surface of solid synthetic polymers.

For this invention, the solid synthetic polymer is treated by the process of U.S. Patent No. 4,803,256 and then is subjected to further processing to obtain the materials of this invention.

Thus, after the surface is altered by the process described above to give a hydrophilic surface, the solid synthetic polymer is then coated with a flowable, curable coating material.

By "flowable", for purposes of this invention, it is meant that the material is capable of being spread across the surface of the treated solid synthetic polymer and may or may not penetrate the treated solid synthetic polymer. This can be accomplished by mere pouring of the coating material on the solid polymer, such as pouring a resinous material on a piece of textile, and allowing the material to wet and self level, or it is meant that the material has a viscosity such that it needs to be applied with a trowel or the like. Usually, the flowable materials that have been found useful in this invention are materials that can be applied with a doctor blade. It is also contemplated within the scope of this invention to use minor amounts of solvents to dilute various viscous materials for application in this invention.

Preferred for this invention are flowable materials that for the most part, fill and close any gaps, voids or openings in the solid synthetic polymeric material, to prevent the flow of water or low viscosity fluids, but will still allow the transportation of various forms of water other than in the liquid phase.

Thus, preferred for this invention are flowable materials having a viscosity of about 40,000 to 150,000 centipoise at 25° C. in the uncured state. More preferred for this invention are flowable materials having a viscosity of about 80,000 to 120,000 centipoise at 25° C. The materials having these viscosities are susceptible of entering the gaps, voids and openings and essentially closing them off without flowing through the material and just coating the individual fibers.

Certain solid synthetic polymers, such as textiles, can be dipped into coating material in order to apply the coating material to the textile. The means for applying the coating material to the altered solid synthetic polymer is not critical as long as the coating material has an opportunity to wet the solid synthetic material and penetrate to some extent into the material.

"Curable" for purposes of this invention means that the material will set up to a non-flowable state. Thus, contemplated within the scope of this invention are those materials that cure upon exposure to the moisture in air such as polyurethane polymers or silicone crosslinkable polymeric systems and the like. Also contemplated within the scope of this invention are those materials that "cure" by simply exposing them to the atmosphere and allowing the solvent to evaporate. Such materials can be, for example, lacquers, oils, resins, rubbers and the like. Further contemplated by the inventor herein, are those materials that require heat and/or heat and catalysis for cure.

Crosslinkable materials in the polyurethane class, are, for example, E-340, catalyzed with CD 75 catalyst, which is a crosslinkable polyurethane system sold by the Mobay Chemical Company, Coatings Division, Mobay Road, Pittsburg, Pennsylvania 15205, that has been found useful in the textile industry for coating and treating fabrics. Further, included within the contemplation of the inventor herein, are any crosslinkable silicone elastomers, for example, those which cure by the action of moisture from the air or crosslinkable silicone elastomers which cure by the action of the reaction of silicon hydride containing materials with unsaturated molecules under the influence of platinum or rhodium catalysis. Also useful in this invention are EVA-carboxylated latices, neoprene and the like.

The processes used herein to coat the solid synthetic polymers can also be used in the preparation of the laminated products claimed in this invention.

In preparing the laminated products of this invention, the further step of bringing two or more altered solid synthetic polymers together, with at least one of them being coated or impregnated with a flowable, curable coating material prior to curing such materials, is all that is required for this invention.

Thus, it is contemplated within the scope of this invention, in one aspect, to use flowable, curable materials to bond such altered solid synthetic polymeric materials together in a sandwich configuration. It is a further aspect of this invention to bond two or more sandwich configurations together to make yet another laminated product. It should be noted by those skilled in the art that the solid synthetic polymeric materials that are bonded together do not necessarily need to be the same types of materials. Thus, 100% polyester materials may be bonded together with polyester/cotton blends to get the benefits of both of those materials.

The inventor herein has described an invention in which new and novel processes are used to create new and novel solid synthetic polymeric materials and laminates. These solid synthetic polymeric materials and laminates have improved functional properties and are significantly improved over the materials known in the prior art.

Now so that those skilled the art can understand and appreciate the invention taught herein, the following examples are presented, it being understood that these examples should not be used to limit the scope of this invention over the limitations found in the claims attached hereto.

The following testing procedure for the effectiveness of application of the instant process on certain substrates was used. The fabrics used in the following examples was treated by the process set forth in Example 1 of U.S. 4,803,256, first method, and then dried to ambient conditions before the samples were treated with the flowable, curable materials.

3

## Example 1

This example shows a lamination of fabric using a cross-linkable polyurethane system E-340, catalyzed with CD 75, sold by Mobay Chemical Company.

Various woven fabrics which were 100% continuous filament constructions, were treated according to the process for hydrophilization as indicated above. The fabric used was 100% bright polyester tricot weighing 4 oz./sq.yard and were laid out flat on a surface and a doctor blade was laid across the fabric at one end. The catalyzed, uncured, flowable polyurethane was poured onto the surface of the fabric ahead of the doctor blade as evenly distributed as was possible by pouring. The doctor blade was slowly drawn through the polyurethane and across the fabric to the opposite edge to give a fairly uniform coating of the polyurethane on the surface of the fabric, as well as wetting the fabric. A second layer of the polyester fabric was applied over the top of the wet coating to form a laminate. The laminated fabrics were immediately placed into an air-circulating oven and cured at 120°C for 2 minutes. The samples were carried out in duplicate and the average values of the duplicates were reported as the test result. The result of the average of the samples of this invention was denoted "1.". The samples were tested for delamination by using a Scott Tensile Tester using modified ASTM test number D-4851, section 14, Volume 7 of the ASTM Standards.

Control samples were tested wherein the control samples were handled just like the test samples of the invention, except that a hydrophilization treatment was not applied to the fabric before the crosslinkable polyurethane was applied.

The samples were carried out in duplicate and the average values of the duplicates were reported as the test result. The result of the average of the samples of this control was denoted "2.". The samples were tested for delamination by using a Scott Tensile Tester as for the inventive samples. The results follow on Table 1.

## TABLE 1

| SAMPLE # | SIZE in$^2$ | Shear in lbs/in$^2$ to separate the laminate |
|---|---|---|
| 1 | 2x10 | 4.0 |
| 2 | 2x10 | 2.5 |

## Example 2

This example was carried out on the same type of fabric as was used in Example 1. The hydrophilic polyester was coated using the doctor blade method of Example 1 and the materials being used to coat the fabric were curable silicone elastomeric materials which, for purposes of this example, were cured at 250° F. for 2 minutes after being coated on the textile substrate.

Sample A falls within the scope of this invention and was a curable silicone composition which was a liquid at room temperature comprising a vinyl terminated polydimethylsiloxane, an organohydrogensiloxane, a platinum-containing curing catalyst and a disilazane treated filler.

Sample B was similar in composition to Sample A but falls outside of the scope of this invention because its viscosity is too low.

Sample C is a control sample, which is the material of sample A which does not have the hydrophilic treatment of this invention.

The following samples were prepared by using a doctor blade on the fabric which was laying on a flat surface as described above for the method of Example 1.

The sample preparations are set forth in Table 2 and the results of testing are set forth in Table 3.

## TABLE 2

| Sample | viscosity in poise at 25°C. | coating thickness from a blade setting of |
|---|---|---|
| A1* | ˜100,000 | .038 mm |
| A2 | ˜100,000 | .028 mm |
| A3 | ˜100,000 | .018 mm |
| A4 | ˜100,000 | .008 mm |
| B1 | ˜ 25,000 | .038 mm |
| B2 | ˜ 25,000 | .028 mm |
| B3 | ˜ 25,000 | .018 mm |
| B4 | ˜ 25,000 | .008 mm |
| C1 | ˜100,000 | .038 mm |
| C2 | ˜100,000 | .028 mm |
| C3 | ˜100,000 | .018 mm |
| C4 | ˜100,000 | .008 mm |

* a similar curable silicone composition having a viscosity of about 160,000 poise was attempted but did not work in this invention because its viscosity was too high.

## TABLE 3

| SAMPLE | HYDROSTATIC HEAD | ADHESION | STEAM PENETRATION |
|---|---|---|---|
| A1 | >117 | GOOD | GOOD |
| A2 | >117 | GOOD | GOOD |
| A3 | >117 | GOOD | GOOD |
| A4 | >117 | GOOD | GOOD |
| B1 | 25 | GOOD | GOOD |
| B2 | 25 | GOOD | GOOD |
| B3 | 25 | GOOD | GOOD |
| B4 | 25 | GOOD | GOOD |
| C1 | >117 | RUB OFF | GOOD |
| C2 | >117 | RUB OFF | GOOD |
| C3 | >117 | RUB OFF | GOOD |
| C4 | >117 | RUB OFF | GOOD |

It can be observed from the results that sample A gave a good hydrostatic head, good adhesion and good steam penetration, while the sample B material did not give a good hydrostatic head because its low viscosity before cure did not allow for adequate coverage of the fibers, that is, it did not cover or narrow the gaps between the fibers to the extent necessary to give the benefits described herein. Sample C did not have the requisite adhesion and therefore, the coating rubbed off.

**Claims**

1. A process for obtaining a coated solid synthetic polymer, the process comprising:
   (I) altering the surface of a solid synthetic polymer by a process comprising:

(A) contacting the polymer with a bath of a swelling agent, or a mixture of swelling agents, and a base, at a pH of seven or greater;

(B) heating the bath to a temperature of at least 200°F. for a time of at least 1 second;

(C) acidifying the bath to a pH of less than 7;

(D) contacting the polymer with a hydrophillic active substance for at least five minutes;

(E) thereafter separating the polymer and the bath, and

(II) coating the treated polymer from (I) with a flowable, curable, coating composition, and

(III) curing the coating on the solid synthetic polymer.

2. A method as claimed in claim 1 wherein the solid synthetic polymer is in the form of a textile.

3. The solid synthetic polymer when prepared by the method of claim 1.

4. A process for obtaining laminated solid synthetic polymers, the process comprising:

a. joining two or more of the altered solid synthetic polymers obtained from step (I) of claim 1 by contacting the surface of at least one of the altered solid synthetic polymers with a flowable, curable coating composition;

b. overlaying the flowable, curable coating composition with at least one additional second layer of solid synthetic polymer to form a laminate; and

c. curing the coating composition.